# EUROPÄISCHE PATENTSCHRIFT

(11) **EP 4 208 295 B1**
(45) Veröffentlichungstag und Bekanntmachung des Hinweises auf die Patenterteilung: **08.04.2026**
(21) Anmeldenummer: 21773015.9
(22) Anmeldetag: 01.09.2021
(51) Int. Cl.: B02C 18/30, B02C 18/36

(54) **FLEISCHWOLF**
MEAT MINCING MACHINE
HACHOIR À VIANDE

(30) Priorität: 02.09.2020 DE 202020105051 U
(43) Veröffentlichungstag der Anmeldung: 12.07.2023
(73) Patentinhaber: Lumbeck & Wolter GmbH & Co. KG, 42287 Wuppertal (DE); Maschinenfabrik Seydelmann KG, 70174 Stuttgart (DE)
(72) Erfinder: BACK, Udo, 97702 Münnerstadt - Reichenbach Bayern (DE); DÖRING, Fabian, 42287 Wuppertal NRW (DE); WAMSLER, Johannes, 73529 Schwäbisch Gmünd (DE)
(74) Vertreter: Kohlstedde, Eva
(86) Internationale Anmeldenummer: PCT/EP2021/074109
(87) Internationale Veröffentlichungsnummer: WO 2022/049111

(56) Entgegenhaltungen:
- CN-U- 208 436 993
- DE-A1- 2 649 305
- DE-C- 809 769
- DE-U1- 8 032 323

## Beschreibung

Die Erfindung bezieht sich auf einen Fleischwolf mit Schneidelementen und mit einer in einem Gehäuse drehbar gelagerten Förderschnecke, welche mit einem Messerzapfen verbunden ist. Die verschiedenen Schneidelemente umfassen beispielsweise Lochscheibe, Messer und/oder Vorschneider.

Bei einem bekannten Fleischwolf ist der Messerzapfen mit einem Ende drehfest mit der Förderschnecke verbunden und besitzt ausgehend von der Verbindungsstelle mit der Förderschnecke einen axial verlaufenden Tragabschnitt, auf dem die Messer drehfest lagern. Auf diese Weise ist gewährleistet, dass bei einer Umdrehung der Förderschnecke die Messer mit der gleicher Drehzahl rotieren. Die benachbart zu den Messern gelagerten Lochscheiben stützen sich bei einer solchen Drehung ortsfest am Fleischwolfgehäuse ab und besitzen eine zentrale Nabe, die vom Messerzapfen durchgriffen wird. Bekannte Messerzapfen haben unterschiedliche Querschnitte, z.B. gemäß DE 26 49 305 C3 und US 4,018390 A einen Tragabschnitt für das Messer in Vierkantform und gemäß DE 20 2020 102 505 U1 einen Tragabschnitt in Form eines Zweiflach mit Abschrägung an einer Kante zur Kodierung. Des Weiteren ist aus DE 809 769 B bekannt, einen Messerzapfen mit einem Querschnitt in Form eines unsymmetrischen Vielecks zu verwenden.

Aus dem Stand der Technik, nämlich den Dokumenten DE 26 49 305 C3, DE 20 2020 102 505 U1 und US 4,018390 A ist bekannt, eine lösbare Verbindung zwischen Förderschnecke und Messerzapfen vorzusehen. Die gezeigte lösbare Verbindung ist eine Schraubverbindung, die den Vorteil hat, dass Schneidelemente und Messerzapfen ausgewechselt werden können. Hier besitzt der Messerzapfen einen Außengewindeabschnitt, der in eine Gewindebuchse an der Förderschnecke eingeschraubt wird. Es hat sich in der Praxis jedoch gezeigt, dass eine solche Schraubverbindung den Nachteil hat, dass sie sich nach langer Gebrauchsdauer schlecht oder gar nicht lösen lässt. Die Anwendung hoher Drehmomente beim Lösen der Schraubverbindung kann zu Schädigungen an den Bauteilen führen. Darüber hinaus ist bei einem geschraubten Messerzapfen ein Rückwärtslauf der Schnecke nicht oder nur bedingt möglich. Dieser Rückwärtslauf bietet jedoch technologische Vorteile. So kann während des Mischvorgangs im Fleischwolf das Material aus der Schnecke dem Trichter zugeführt werden, ohne diese Möglichkeit bliebe das Material in den Schneckenzügen unvermischt. Auch bei Verwendung von Gefrierfleisch in einem Fleischwolf hat ein kurzzeitiger Rückwärtslauf vor einer geplanten Unterbrechung Vorteile, da der Schneidsatz dadurch frei wird und nicht während des Stillstands einfrieren kann. Dies minimiert das Risiko eines Bruchs eines Schneidelements beim Wiederanfahren des Fleischwolfs.

Andere Verbindungen zwischen der Förderschnecke und dem Messerzapfen sind in dem Dokument DE 100 26 825 C2, nämlich eine Passfeder-Nut-Verbindung oder in dem Dokument DE 80 32 323 U1, nämlich eine Pressverbindung, gezeigt. Auch diese Verbindungen ermöglichen eine leichte Montage des Messerzapfens, sind jedoch nach langem Gebrauch nicht mehr lösbar.

Aufgabe der vorliegenden Erfindung ist es, einen Fleischwolf mit einer antreibbaren Förderschnecke zur Verfügung zu stellen, bei dem der Messerzapfen leicht mit der Förderschnecke verbunden und auch wieder leicht gelöst werden kann. Beim Betrieb des Fleischwolfes soll sichergestellt sein, dass eine Übertragung des Drehmoments der Förderschnecke auf den Messerzapfen und damit auf die Messer gewährleistet ist.

Diese Aufgabe wird mit einem Fleischwolf mit den Merkmalen des Anspruchs 1 gelöst. Vorteilhafte Ausführungen beschreiben die Unteransprüche.

Dieser Fleischwolf besitzt in bekannter Weise eine im Fleischwolfgehäuse gelagerte Förderschnecke, welche insbesondere über einen Elektromotor angetrieben werden kann. An dieser Förderschnecke ist drehfest ein Messerzapfen gelagert, der mit seinem einen Ende lösbar an der Förderschnecke gehalten ist. Der Fleischwolf umfasst des Weiteren mindestens einen Schneidsatz, wobei ein Schneidsatz verschiedene Schneidelemente umfassen kann. Solche Schneidelemente sind beispielsweise ortsfest am Fleischwolfgehäuse abgestützte Lochscheiben und Vorschneider. Solche Schneidelemente umfassen des Weiteren drehfest auf einem Tragabschnitt des Messerzapfens gelagerte Messer, die mit benachbart angeordneten Lochscheiben zur Zerkleinerung des Fleisches zusammenwirken. Neu ist, dass der Messerzapfen mit seinem einen Ende, dem Einsteckende, in einer Lagerbohrung der Förderschnecke eingesteckt ist. Um eine Drehmomentübertragung von der Förderschnecke auf den Messerzapfen zu gewährleisten, ist das Einsteckende des Messerzapfens an die Form der Lagerbohrung angepasst.

Bei einer Ausführungsform ist die Querschnittsform des Messerzapfens in axialer Richtung, d.h. in Förderrichtung, unverändert. Der Querschnitt des Tragabschnitts des Messerzapfens als auch des Verbindungsabschnitts mit der Förderschnecke am Einsteckende des Messerzapfens kann jedoch ein beliebiger polygoner Querschnitt sein, beispielsweise ein sogenannter Zweiflach mit zwei parallel zueinander angeordneten Übertragungsflächen für das Drehmoment.

Die Querschnittsform des Tragabschnitts und des Verbindungsabschnitts am Einsteckende des Messerzapfens können gleich oder unterschiedlich sein.

Bei einer Ausführungsform haben das Einsteckende des Messerzapfens und der Tragabschnitt des Messerzapfens die gleiche Querschnittsform. Das Einsteckende hat jedoch einen größeren Umfang als der Tragabschnitt, auf dem die Messer lagern. Das Einsteckende überragt den Tragabschnitt in radialer Richtung. Durch den größeren Querschnitt am Einsteckende ist im Übergangsbereich zwischen Einsteckende und Tragabschnitt umfangsseitig eine Anschlagfläche gebildet. Diese Anschlagfläche dient als Anschlag für einen Befestigungsring. Dieser Befestigungsring besitzt eine entsprechend große Öffnung, so dass er einerseits vom hinteren Ende des Tragabschnitts bis an die Anschlagfläche geschoben werden kann. Diese Öffnung des Befestigungsrings ist so groß, dass eine Rotation des Messerzapfens nicht behindert wird. Anderseits ist die Öffnung so klein, dass der Befestigungsring nicht über das Einsteckende des Messerzapfens passt.

Bei einer weiteren Ausführungsform haben der Tragabschnitt des Messerzapfens und das Einsteckende des Messerzapfens eine unterschiedliche Querschnittsform. Bei einer weiteren Ausführungsform haben der Tragabschnitt des Messerzapfens und das Einsteckende des Messerzapfens eine gleiche Querschnittsformen, jedoch in radial versetzter Anordnung, so dass das Einsteckende den Tragabschnitt wenn nicht umfangsseitig so doch zumindest an mehreren Umfangsstellen bzw. -abschnitten überragt und sich im Übergangsbereich zwischen Einsteckende und Tragabschnitt umfangsseitig eine oder mehrere Anschlagflächen für den separaten Befestigungsring ergeben.

Bei der Montage wird der Messerzapfen mit dem Einsteckende in die Lagerbohrung der Förderschnecke eingesteckt. Der auf den Messerzapfen aufgeschobene und an der Anschlagfläche des Messerzapfens anliegende Befestigungsring wird anschließend mit der Förderschnecke verbunden. Bei dieser Verbindung handelt es sich um eine lösbare Verbindung, wobei der Befestigungsrings und die Förderschnecke zueinander passende Verbindungsmittel besitzen. Bevorzugt wird eine kraft- und/oder formschlüssige Verbindung, z.B. um eine Schraubverbindung.

Bei einer bevorzugten Ausführungsform besitzt der Befestigungsring ein Außengewinde an seiner Umfangsfläche und die Förderschnecke ein passendes Innengewinde. Dazu ist am ausgangsseitigen Ende vor der Lagerbohrung in der Förderschnecke eine zylindrische Buchse mit entsprechendem Innengewinde vorgesehen. Bei dieser Ausführungsform wird der Befestigungsring ebenso über den Tragabschnitt bis an die Anschlagfläche geschoben und das Einsteckende des Messerzapfens in die Lagerbohrung eingesetzt. Da die Öffnung des Befestigungsrings kleiner ist als der Durchmesser am Einsteckende, wird der Messerzapfen durch die Schraubverbindung zwischen Befestigungsring und Förderschnecke axial in Position gehalten. Die Montage des Messerzapfens an der Förderschnecke ist in einfacher Weise möglich. Die Drehmomentübertragung zwischen Förderschnecke und Messerzapfen wird über die aufeinander abgestimmten Querschnitte von Einsteckende und Lagerbohrung sichergestellt.

In vorteilhafter Weise ist ein solcher Messerzapfen leichter von der Förderschnecke zu lösen als bekannte Messerzapfen. Bei der Demontage des Messerzapfens werden insbesondere Beschädigungen am Messerzapfen vermieden, da die Kräfte zum Lösen der Schraubverbindung ausschließlich auf dem Befestigungsring wirken. Zur Erleichterung des Lösens der Schraubverbindung sind bei einer vorteilhaften Ausführungsform Nuten am Befestigungsring vorhanden, welche beim Lösen der Schraubverbindung Eingriffsmöglichkeiten für passende Werkzeuge bieten.

Bei einer weiteren Ausführungsform besitzt der Befestigungsring eine umlaufende Rippe an seiner Umfangsfläche, die mit einer Ringnut in der zylindrischen Buchse am ausgangsseitigen Ende vor der Lagerbohrung in der Förderschnecke zusammenwirkt. Auch andere kraft- und/oder formschlüssige Verbindungen zur Verbindung des Befestigungsrings sind verwendbar, wie z.B. Verhakungen. Auch Bajonettverschlüsse wie sie von der Befestigung eines Objektivs an einer Kamera bekannt sind, sind einsetzbar, nämlich indem Nasen am Befestigungsring und entsprechende Aussparungen in der zylindrischen Buchse vorgesehen werden.

Zusätzlich kann bei der Verbindung zwischen Messerzapfen und Förderschnecke eine Abdichtung mittels Dichtringen vorgesehen werden, um eine Eindringen von Zerkleinerungsgut in den Bereich der Schraubverbindung und der Lagerbohrung zu verhindern.

Der neue Fleischwolf besitzt in bekannter Weise eine antreibbare Förderschnecke und einen drehfest an der Förderschnecke gelagerten Messerzapfen, der in vorteilhafter Weise mittels eines Befestigungsrings leicht mit einer Förderschnecke verbunden werden kann. Diese Verbindung ist in gleicher Weise leicht lösbar, wobei beim Lösen der Verbindung Beschädigungen des Messerzapfens vermieden werden. Darüber hinaus ist in vorteilhafter Weise bei dieser Verbindung des Messerzapfens mit der Förderschnecke ein Rückwärtslauf der Schnecke möglich.

Nachfolgend wird die Erfindung anhand eines Ausführungsbeispiels anhand der Zeichnung näher erläutert.

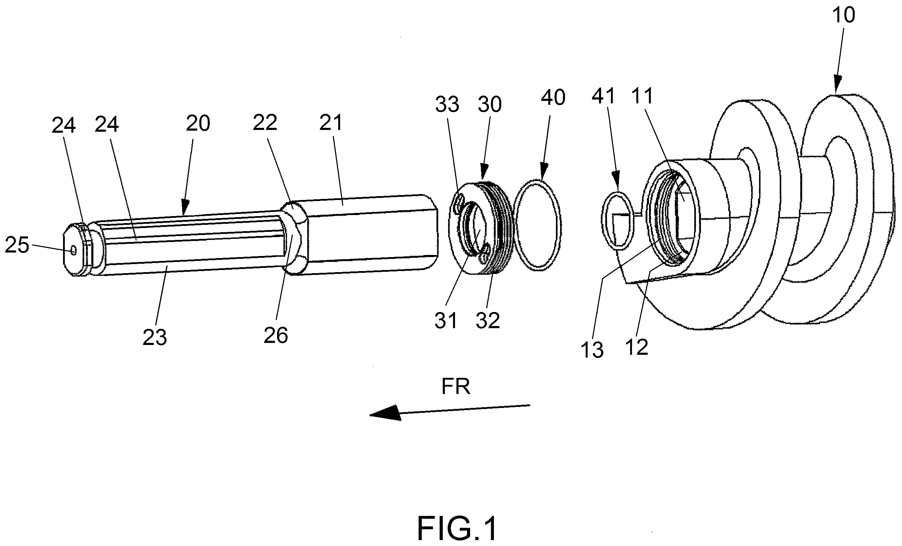

Zur besseren Übersichtlichkeit zeigt die Fig. 1 nur die Teile des Fleischwolfs, auf die sich die neue Erfindung bezieht. Gezeigt sind in perspektivischer Ansicht die Förderschnecke 10, der Messerzapfen 20 und der zur Verbindung des Messerzapfens 20 mit der Förderschnecke 10 verwendete Befestigungsring 30. Zusätzlich sind in diesem Ausführungsbeispiel zwei Dichtringe 40, 41 vorgesehen. In Fig. 1 ist die Förderrichtung des Zerkleinerungsgutes im Fleischwolf eingezeichnet.

Der Messerzapfen 20 besitzt in Förderrichtung FR gesehen ein vorderes Einsteckende 21, einen Übergangsbereich 26 und einen Tragabschnitt 23, auf dem Messer drehfest angeordnet werden können. Die Förderschnecke 10 weist eine Lagerbohrung 11 für das Einsteckende 21 des Messerzapfens 20 auf. Der Querschnitt dieser Lagerbohrung 11 ist an den Querschnitt des als Verbindungsabschnitt dienenden Einsteckendes 21 angepasst. In diesem Beispiel handelt es sich um eine Zweiflachform mit zwei geraden Seitenflächen, welche parallel zueinander sowohl am Einsteckende 21 des Messerzapfens 20 als auch in der Lagerbohrung 11 der Förderschnecke 10 angeordnet sind. Diese geraden Seitenflächen dienen zur Drehmomentübertragung und sind jeweils über eine nach außen gewölbte Seitenfläche miteinander verbunden. Auch der Tragabschnitt 23 hat in diesem Beispiel die Form eines Zweiflach. Die aufeinander abgestimmten Querschnitte des Einsteckendes 21 und der Lagerbuchse 11 sowie des Tragabschnitts 23 und der Ausnehmung im Messer gewährleisten, dass bei einer Drehung der Förderschnecke 10 der Messerzapfen 20 und auch das Messer mitgedreht wird. Das Messer ist hier nicht gezeigt. Bei einer solchen Drehung wird der Messerzapfen 20 mittels des Befestigungsrings 30 axial in Position gehalten.

Vor der Montage des Messerzapfens 20 wird der Befestigungsring 30 vom in Förderrichtung FR hinteren Ende des Messerzapfens 20 auf den Messerzapfen 20 aufgesteckt. Der Befestigungsring 30 wird über den Tragabschnitt 23 des Messerzapfens 20 bis zum Übergangsbereich 26 geschoben, wo er mit seiner Vorderseite an eine Anschlagfläche 22 zur Anlage kommt, da die Öffnung 31 des Befestigungsrings 30 kleiner ist als der Querschnitt des Einsteckendes 21 des Messerzapfens 20. Der Übergangsbereich 26 zwischen dem Einsteckende 21 und dem Tragabschnitt 23 des Messerzapfens 20 besitzt einen runden Querschnitt. Der Durchmesser des Übergangsbereiches 26 ist an den Durchmesser der Öffnung 31 des Befestigungsrings 30 angepasst, so dass eine Rotation des Messerzapfens 20 nicht behindert wird.

Zur Montage wird der Messerzapfen 20 mit seinem Einsteckende 21 in die Lagerbohrung 11 eingeschoben und der auf dem Übergangsbereich 26 lagernde Befestigungsring 30 mit der Förderschnecke 10 verbunden. Hierzu besitzt die Förderschnecke 10 vor der Lagerbohrung 11 eine zylindrische Buchse mit einem Innengewinde 13. Dieses Innengewinde 13 wirkt mit einem Außengewinde 32 an der Umfangsfläche des Befestigungsrings 30 zusammen. Die Schraubverbindung zwischen Befestigungsring 30 und Förderschnecke 10 stellt gleichzeitig eine Verbindung zwischen Messerzapfen 20 und Förderschnecke 10 her. Bei montiertem Messerzapfen 20 trägt dieser im Tragabschnitt 23 die Messer des Fleischwolfs und gewährleistet über eine drehfeste Verbindung mit diesen Messern, dass bei Drehung der Förderschnecke 10 sich diese mitbewegen.

Bei dieser Ausführungsform kann das Innere der Förderschnecke durch Dichtringe 40, 41 abgedichtet werden. Das Innere der Förderschnecke 10 ist gegenüber dem Zerkleinerungsraum des Fleischwolfs und damit vor Eindringen von Zerkleinerungsgut abgedichtet. Ein Dichtring 40 wird vorzugsweise in einer Ringnut im Inneren des Befestigungsrings 30 aufgenommen.

Nach dem Einsetzen des Messerzapfens 20 und Eindrehen des Befestigungsrings 30 in die zylindrische Buchse der Förderschnecke 10 wird der Messerzapfen 20 axial fest an der Förderschnecke 10 gehalten und ist drehfest mit dieser verbunden. Ein Lösen dieser Schraubverbindung ist ohne Beschädigung des Messerzapfens 20 möglich, da beim Lösen des Befestigungsrings 30 kein Drehmoment auf den Messerzapfen 20 ausgeübt wird. Für das Herstellen der Schraubverbindung aber insbesondere auch für das Lösen der Schraubverbindung sind zusätzlich Nuten 33 an der in Förderrichtung weisenden Seitenfläche des Befestigungsrings 30 eingelassen. In diese Nuten 33 kann ein entsprechendes Hilfswerkzeug eingreifen, um eine Drehung zum Lösen der Schraubverbindung aufzubringen.

Die lösbare Verbindung zwischen Befestigungsring 30 und Förderschnecke 10 ist in diesem Ausführungsbeispiel eine Schraubverbindung. Bei anderen Ausführungsbeispielen der Erfindung sind andere bekannte kraft- und/oder formschlüssige Verbindungen vorgesehen.

### Bezugszeichenliste

- 10: Förderschnecke
- 11: Lagerbohrung
- 12: Anlagefläche
- 13: Innengewinde
- 20: Messerzapfen
- 21: Einsteckende
- 22: Anschlagfläche
- 23: Tragabschnitt
- 24: Kodierelement
- 25: axiale Bohrung
- 30: Befestigungsring
- 31: Öffnung
- 32: Außengewinde
- 33: Nut
- 35: Rand

- FR: Förderrichtung

## Patentansprüche

1. Fleischwolf mit einer antreibbaren Förderschnecke (10), mit einem drehfest an der Förderschnecke (10) gelagerten Messerzapfen (20) und mit mindestens einen Schneidsatz,
- wobei ein Schneidsatz zumindest eine ortsfest am Fleischwolfgehäuse abgestützte Lochscheibe und ein drehfest auf einem Tragabschnitt (23) des Messerzapfens (20) gelagertes Messer umfasst,
- wobei der Messerzapfen (20) mit einem Ende lösbar an der Förderschnecke (10) gehalten ist,
**dadurch gekennzeichnet,**
- **dass** der Messerzapfen (20) in einer Lagerbohrung (11) der Förderschnecke (10) eingesteckt ist, wobei der Querschnitt der Lagerbohrung (11) an den Querschnitt des Einsteckendes (21) des Messerzapfens (20) angepasst ist,
- **dass** das Einsteckende (21) des Messerzapfens (20) den Tragabschnitt (23) des Messerzapfens (20) in radialer Richtung überragt und dass im Übergangsbereich (26) zwischen Einsteckende (21) und Tragabschnitt (23) umfangsseitig eine Anschlagfläche (22) vorhanden ist,
- **dass** mittels eines Befestigungsrings (30), welcher einerseits über den Tragabschnitt (23) des Messerzapfens (20) bis an die Anschlagfläche (22) geschoben ist und andererseits mit der Förderschnecke (10) verbindbar ist, eine lösbare Verbindung des Messerzapfens (20) mit der Förderschnecke (10) erzielt wird, wobei der Befestigungsrings (30) und die Förderschnecke (10) zueinander passende Verbindungsmittel besitzen.

2. Fleischwolf nach Anspruch 1, **dadurch gekennzeichnet, dass** eine lösbare Verbindung zwischen dem Befestigungsring (30) und der Förderschnecke (10) mittels einer formschlüssigen und/oder kraftschlüssigen Verbindung vorliegt.

3. Fleischwolf nach Anspruch 2, **dadurch gekennzeichnet, dass** eine Schraubverbindung oder eine Feder-Nut-Verbindung oder eine Verhakung oder eine Bajonettverbindung, vorzugsweise eine Schraubverbindung, zwischen dem Befestigungsring (30) und der Förderschnecke (10) vorliegt.

4. Fleischwolf nach Anspruch 3, **dadurch gekennzeichnet, dass** der Befestigungsring (30) ein Außengewinde (32) an seiner Umfangsfläche (26) und die Förderschnecke (10) ein passendes Innengewinde (13) für die Schraubverbindung besitzt, wobei am ausgangsseitigen Ende vor der Lagerbohrung (11) eine zylindrischen Buchse mit entsprechendem Innengewinde (13) vorhanden ist.

5. Fleischwolf nach Anspruch 1, **dadurch gekennzeichnet, dass** der Durchmesser einer Öffnung (31) im Befestigungsring (30) an den Durchmesser des Übergangsbereich (26) des Messerzapfens (20), nämlich zwischen Einsteckende (21) und Tragabschnitt (23), angepasst ist und dieser Durchmesser der Öffnung (31) im Befestigungsring (30) kleiner ist als der Durchmesser des Einsteckendes 21 des Messerzapfens (20).

6. Fleischwolf nach einem der Ansprüche 4 oder 5, **dadurch gekennzeichnet, dass** Dichtringe (40, 41) im Verbindungsbereich zwischen dem Befestigungsring (30) und der Förderschnecke (10) vorhanden sind.

7. Fleischwolf nach Anspruch 6, **dadurch gekennzeichnet, dass** ein in Förderrichtung vorderer Dichtring (41) an einem Ende der Schraubverbindung angeordnet ist und ein in Förderrichtung hinterer Dichtring (40) am andere Ende der Schraubverbindung.

8. Fleischwolf nach Anspruch 7, **dadurch gekennzeichnet, dass** der vordere Dichtring (41) an einer Anlagefläche (12) anliegt, welche die zylindrische Buchse mit dem Innengewinde (11) nach vorn begrenzt.

9. Fleischwolf nach einem der Ansprüche 1 bis 8, **dadurch gekennzeichnet, dass** der Befestigungsring (30) Handhabungsmittel besitzt, beispielsweise in Form von Nuten (33) oder Kerben.

10. Fleischwolf nach einem der Ansprüche 1 bis 9, **dadurch gekennzeichnet, dass** der Tragabschnitt (23) des Messerzapfens (20) eine vergleichbare Querschnittsform zum Verbindungsabschnitt am Einsteckende (21) des Messerzapfens (20) besitzt, vorzugsweise die Form eines Zweiflach.

11. Fleischwolf nach einem der Ansprüche 1 bis 9, **dadurch gekennzeichnet, dass** der Tragabschnitt (23) des Messerzapfens (20) eine andere Querschnittsform als der Verbindungsabschnitt am Einsteckende (21) des Messerzapfens (20) besitzt.

12. Fleischwolf nach einem der Ansprüche 1 bis 11, **dadurch gekennzeichnet, dass** das Einsteckende (21) des Messerzapfens (20) den Tragabschnitt (23) des Messerzapfens (20) in radialer Richtung vollständig umfangsseitig oder abschnittsweise umfangsseitig überragt und dass im Übergangsbereich (26) zwischen Einsteckende (21) und Tragabschnitt (23) eine oder mehrere Anschlagflächen (22) vorhanden sind.

## Claims

1. Meat mincer with a drivable feed worm (10), with a blade shaft (20) mounted non-rotatably on the feed worm (10) and with at least one cutting set,
- wherein a cutting set comprises at least one perforated disc supported in a stationary manner on the mincer housing and a blade mounted in a rotationally fixed manner on a support section (23) of the blade shaft (20),
- whereby the blade shaft (20) is held at the feed worm (10) with one end,
**characterised in that**
- the blade shaft (20) is inserted into a bearing bore (11) of the feed worm (10), whereby the cross-section of the bearing bore (11) is adjusted to the cross-section of the insertion end (21) of the blade shaft (20),
- the insertion end (21) of the blade shaft (20) projects the support section (23) of the blade shaft (20) in a radial direction and that there is a stop section (22) on the transition area (26) between the end of the shaft (21) and the support section (23),
- a detachable coupling of the blade shaft (20) with the feed worm (10) is achieved by means of a mounting ring (30) which is pushed to the stop section (22) on the one hand over the support section (23) of the blade shaft (20), and on the other hand is connectable to the feed worm (10), whereby the mounting ring (30) and the feed worm (10) have matching joints.

2. Meat mincer as defined in claim 1, **characterised by** the presence of a detachable coupling between the mounting ring (30) and the feed worm (10) by means of a positive and/or positive coupling.

3. Meat-mincer according to claim 2, **characterised by** a screw connection or a spring-groove connection or an interlocking or a bayonet connection, preferably a screw connection, between the mounting ring (30) and the feed worm (10).

4. Meat mincer according to claim 3, **characterised by** the mounting ring (30) having an external thread (32) at its peripheral area (26) and the feed worm (10) having a suitable internal thread (13) for the screw connection, with a cylindrical bushing with corresponding internal thread (13) at the output end before the bearing bore (11).

5. Meat mincer according to claim 1, **characterised in that** the diameter of an opening (31) in the mounting ring (30) is adapted to the diameter of the transition area (26) of the blade shaft (20), namely between the insertion end (21) and the support section (23), and this diameter of the opening (31) in the mounting ring (30) is smaller than the diameter of the insertion end (21) of the blade shaft (20).

6. Meat mincer according to one of claims 4 or 5, **characterised by** the presence of sealing rings (40, 41) in the connection area between the mounting ring (30) and the feed worm (10).

7. Meat mincer according to claim 6, **characterised by** a front sealing ring (41) in the direction of delivery at one end of the screw connection and a rear sealing ring (40) in the direction of the screw connection.

8. Meat mincer according to claim 7, **characterised by** the front sealing ring (41) being attached to a contact surface (12) which limits the cylindrical bushing with the internal thread (11) to the front.

9. Meat mincer according to one of claims 1 to 8, **characterised by** the mounting ring (30) having handling means, for example, in the form of grooves (33) or notches.

10. Meat-mincer according to one of claims 1 to 9, **characterised by** the cross-section (23) of the blade shaft (20) having a comparable cross-sectional shape to the connector section at the insertion end (21) of the blade shaft (20), preferably with the shape of a dihedron.

11. Meat-mincer according to one of claims 1 to 9, **characterised by** the cross-section (23) of the blade shaft (20) having a cross-sectional shape other than the connector section at the insertion end (21) of the blade shaft (20).

12. Meat-mincer according to one of claims 1 to 11, **characterised by** the insertion end (21) of the blade shaft (20) completely projecting the support section (23) of the blade shaft (20) in a radial direction or in sections extensively, and by the transition area (26) between the insertion end (21) and the support section (23) having one or more stop sections (22).

## Revendications

1. Hachoir à viande comprenant une vis sans fin (10) entraînable, un axe porte-lame (20) en appui fixe contre la vis sans fin (10) et au moins un accessoire de coupe,
- sachant que l'accessoire de coupe comprend au moins un disque ajouré en appui fixe contre le boîtier du hachoir à viande, et un couteau en appui fixe sur un segment support (23) de l'axe porte-lame (20),
- sachant que l'axe porte-lame (20) est maintenu par une extrémité, de manière détachable, contre la vis sans fin (10),
**caractérisé en ce que**
- l'axe porte-lame (20) est emmanché dans un alésage palier (11) de la vis sans fin (10), sachant que la section de l'alésage palier (11) est adaptée à la section de l'extrémité emboîtable (21) de l'axe porte-lame (20),
- l'extrémité emboîtable (21) de l'axe porte-lame (20) dépasse en direction radiale le segment support (23) de l'axe porte-lame (20), et qu'une surface butée (22) est présente périphériquement dans la zone de transition (26) entre l'extrémité emboîtable (21) et le segment support (23),
- au moyen d'une bague de fixation (30) qui d'une part est poussée jusqu'à la surface butée (22) par-dessus le segment support (23) de l'axe porte-lame (20) et qui d'autre part est reliable avec la vis sans fin (10), une liaison détachable de l'axe porte-lame (20) avec la vis sans fin (10) est obtenue, sachant que la bague de fixation (30) et la vis sans fin (10) présentent des moyens de jonction mutuellement adaptés.

2. Hachoir à viande selon la revendication 1, **caractérisé en ce qu'**il y a présence d'une liaison détachable entre la bague de fixation (30) et la vis sans fin (10) au moyen d'une liaison par adhérence de formes et/ou par adhérence de forces.

3. Hachoir à viande selon la revendication 2, **caractérisé en ce qu'**une liaison vissée ou une liaison par tenon et mortaise ou une liaison par accrochage ou une liaison à baïonnette, de préférence une liaison vissée, est présente entre la bague de fixation (30) et la vis sans fin (10).

4. Hachoir à viande selon la revendication 3, **caractérisé en ce que** la bague de fixation (30) possède un filetage extérieur (32) sur sa surface circonférentielle (26) et que la vis sans fin (10) possède un filetage intérieur (13) adapté pour obtenir la liaison vissée, sachant que contre l'extrémité côté sortie de l'alésage palier (11) est présente une douille cylindrique présentant un filetage intérieur (13) correspondant.

5. Hachoir à viande selon la revendication 1, **caractérisé en ce que** le diamètre d' une ouverture (31) dans la bague de fixation (30) est adapté au diamètre de la zone de transition (26) de l'axe porte-lame (20), à savoir entre l'extrémité emboîtable (21) et le segment support (23), et que ce diamètre de l'ouverture (31) dans la bague de fixation (30) est inférieur au diamètre de l'extrémité emboîtable (21) de l'axe porte-lame (20).

6. Hachoir à viande selon l'une des revendications 4 ou 5, **caractérisé en ce que** des bagues d'étanchéité (40, 41) sont présentes dans la zone de liaison entre la bague de fixation (30) et la vis sans fin (10).

7. Hachoir à viande selon la revendication 6, **caractérisé en ce qu'**une bague d'étanchéité (41) avant, observée dans le sens du refoulement, est disposée contre une extrémité de la liaison vissée, et qu'une bague d'étanchéité (40) arrière, observée dans le sens du refoulement, est présente à l'autre extrémité de la liaison vissée.

8. Hachoir à viande selon la revendication 7, **caractérisé en ce que** la bague d'étanchéité (41) avant applique contre une surface d'applique (12) qui limite, en direction avant, la douille cylindrique avec le filetage intérieur (11).

9. Hachoir à viande selon l'une des revendications 1 à 8, **caractérisé en ce que** la bague de fixation (30) possède des moyens de manipulation par exemple sous la forme de gorges (33) ou d'entailles.

10. Hachoir à viande selon l'une des revendications 1 à 9, **caractérisé en ce que** le segment support (23) de l'axe porte-lame (20) possède une section de forme comparable au segment de liaison sur l'extrémité emboîtable (21) de l'axe porte-lame (20), de préférence la forme d'un corps cylindrique à deux plats opposés.

11. Hachoir à viande selon l'une des revendications 1 à 9, **caractérisé en ce que** le segment support (23) de l'axe porte-lame (20) possède une section de forme différente de celle du segment de liaison sur l'extrémité emboîtable (21) de l'axe porte-lame (20).

12. Hachoir à viande selon l'une des revendications 1 à 11, **caractérisé en ce que** l'extrémité emboîtable (21) de l'axe porte-lame (20) dépasse entièrement en direction radiale - sur sa périphérie ou sur des segments de sa périphérie - le segment support (23) de l'axe porte-lame (20), et qu'une ou plusieurs surface(s) butée(s) (22) est/sont présente(s) dans la zone de transition (26) entre l'extrémité emboîtable (21) et le segment support (23).
